Europäisches Patentamt

European Patent Office

Office européen des brevets

(11) Veröffentlichungsnummer: **0 267 871**
A1

(12) **EUROPÄISCHE PATENTANMELDUNG**

(21) Anmeldenummer: 87810553.5

(22) Anmeldetag: 24.09.87

(51) Int. Cl.⁴: **A 22 C 17/10**
B 65 B 51/04

(30) Priorität: 03.11.86 CH 4342/86

(43) Veröffentlichungstag der Anmeldung:
18.05.88 Patentblatt 88/20

(84) Benannte Vertragsstaaten:
AT BE CH DE ES FR GB GR IT LI LU NL SE

(71) Anmelder: Wälchli, Hans, Dr.
Rebbergstrasse 32
CH-8113 Boppelsen (CH)

(72) Erfinder: Wälchli, Hans, Dr.
Rebbergstrasse 32
CH-8113 Boppelsen (CH)

(74) Vertreter: Blum, Rudolf Emil Ernst et al
c/o E. Blum & Co Patentanwälte Vorderberg 11
CH-8044 Zürich (CH)

(54) Verfahren zum Beschriften von Würsten und Etikette zur Durchführung des Verfahrens.

(57) Etiketten (10) werden als endloses Band gefertigt, wobei jede Etikette mit einer Lochung 1 versehen ist. Zum Trennen der Etiketten sind perforierte Schwächungslinien (11) vorhanden. Diese Etiketten können durch einen Druckapparat mit einstellbaren Drucktypen laufen und werden bedruckt oder geprägt. Bei der Clipmaschine kann ein Clip oder eine Klammer die Etikette aufnehmen, die in ähnlicher Weise wie die Aufhängeschlaufen angeclippt werden.

Fig. 1

EP 0 267 871 A1

## Beschreibung

### Verfahren zum Beschriften von Würsten und Etikette zur Durchführung des Verfahrens

Bei der Herstellung von Würsten wird Wurstbrät mit Druck in eine längliche Hülle aus natürlichem oder künstlichem Darm gepresst, dessen offenes Ende zuvor mittels eines Clips aus z.B. Aluminiumdraht verschlossen wurde. Durch das Füllen der Hülle entfernt sich das geschlossene Ende von der Einfüllstelle und durch Anbringen eines weiteren Clips wird die Grösse der Wurst bestimmt. Dabei ist es schon lange bekannt geworden, in kurzem Abstand gleichzeitig zwei Clips anzubringen um die hergestellte Wurst vom Ende einer nachfolgend hergestellten Wurst abtrennen zu können.

In der Technik ist es auch schon lange bekannt, gleichzeitig mit dem Anbringen eines Clips noch eine Aufhängeschlaufe anzuclippen.

Es wird nun von Kundenseite verlangt, dass die Nahrungs mittel mit Datum versehen in den Handel kommen, um keine alt gewordenen oder gar verdorbenen Nahrungsmittel angeboten zu erhalten. Da es bei Würsten wichtig ist entweder das Datum der Herstellung vor dem Brühen und/oder Räuchern zu kennen, muss der Wurstfabrikant eine Möglichkeit haben, seine Würste zu bezeichnen.

Es ist deshalb eine Aufgabe der Erfindung anzugeben, wie sich dieses Problem lösen lässt.

Erfindungsgemäss wird dies mit einem Verfahren gemäss der Definition im Patentanspruch 1 gelöst. Etiketten zur Durchführung des Verfahrens sind im Patentanspruch 4 definiert.

In der beiliegenden Zeichnung sind zwei Varianten als beispielsweise Ausführungsbeispiele dargestellt. Es zeigen:

Fig. 1 eine perspektivische Darstellung eines Bandes von aneinanderhängenden Etiketten, und

Fig. 2 eine perspektivische Darstellung eines Trägerbandes mit klebegehalterten einzelnen Etiketten, in Verbindung mit einer Vorrichtung zum Ablösen derselben.

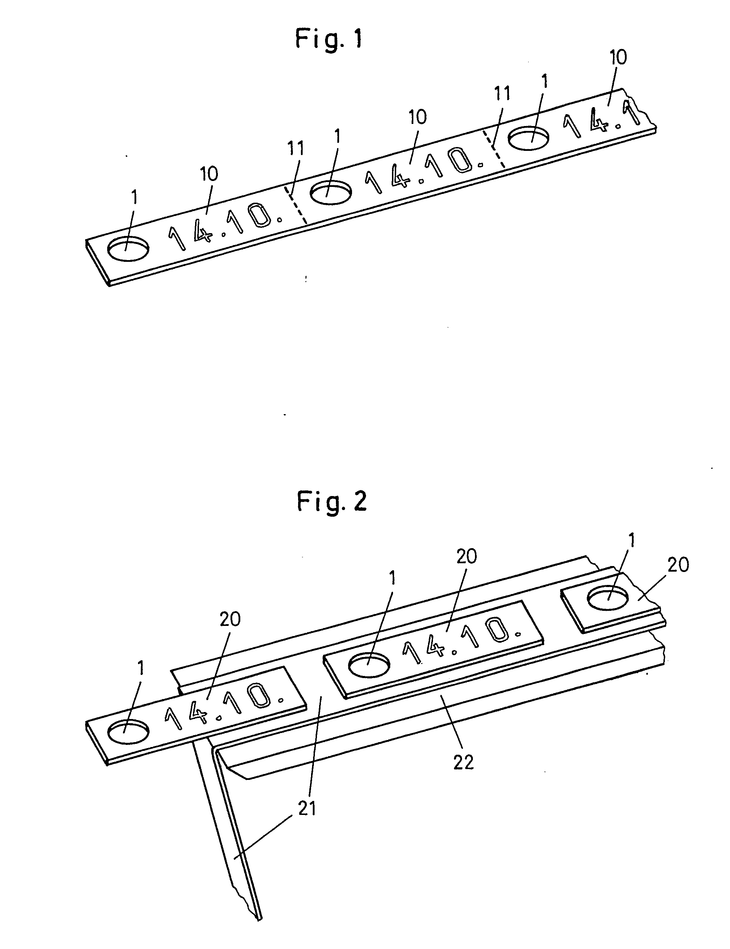

Die Etiketten (Fig. 1 oder Fig. 2) sind längliche begrenzte Streifen die einerends gelocht sind. Die Lochung 1 soll immer auf derselben Seite, zum Beispiel vorn in Zuführrichtung gesehen, sein, um das Anbringen zu automatisieren. Es hat sich als vorteilhaft gezeigt, wenn die Lochung 8-10 mm ist. Demgemäss muss die Etikette 10,20 eine Breite von 12-15 mm haben. In der Länge genügen hingegen 30-40 mm, da nur vorgesehen ist, Tag und Monat aufzudrucken, so dass mit Punkten eine maximale Schriftlänge von 6 Stellen benötigt wird. Selbstverständlich könnten auch andere Masse für die Etikette selbst vorgesehen sein, wenn beispielsweise noch ein Endtag für den Verkauf vorzudrucken wäre.

Gemäss Fig. 1 sind die Etiketten 10 aneinanderhängend ausgebildet. Es kann schon zum voraus eine Perforation zur Abtrennung vorgesehen sein. Anderseits könnte natürlich auch ein Schneidgerät vorgesehen sein, das mit der Clipmaschine zusammen betätigt wird. Vorzugsweise werden die Etiketten direkt vor ihrer Verwendung gestempelt um sicherzustellen, dass nicht ein Vorrat erst an einem späteren Tag aufgebraucht werden kann.

In Fig. 2 sind die Etiketten 20 einzeln und im Abstand voneinander auf einem Trägerband 21 angeordnet und befestigt. Nach dem Stempeln mit dem Datum können die auf dem Band 21 befindlichen Etiketten auf einer Bahn 22 zur Clipmaschine geführt werden. Das Ende der Bahn kann in bekannter Weise mit einer scharfen Kante versehen sein, über die das Band 21 nach unten gezogen wird, um so die Etikette 20 vom Band 21 zu lösen, damit sie dort eingeclippt werden kann.

Die Etiketten 10,20 müssen natürlich aus einem temperatur-und feuchtigkeitsbeständigem Material bestehen, um das Brühen bei 80° - 100° C und nachfolgendes Räuchern zu überstehen. Auch muss der Aufdruck resp. Prägung unverwischbar sein.

Die Etikette könnte dieser Anforderung entsprechend ein Papierstreifen sein, der nach dem Bedrukken mit Kunststoff beschichtet wird. Die Beschichtung könnte dann ihrerseits durch zwei Bänder, die randweise verschweisst oder verklebt werden gebildet werden oder das Papierband könnte auch nur beidseitig besprüht werden.

### Patentansprüche

1. Verfahren zum Beschriften von Würsten bei deren Herstellung mit einem Datum, dadurch gekennzeichnet, dass beim Setzen von Clips zum Verschliessen der Wursthaut eine bedruckte oder geprägte Etikette mit angeclippt wird.

2. Verfahren nach Patentanspruch 1, dadurch gekennzeichnet, dass einem Datiergerät einzelne Etiketten zugeführt werde, die nach dem Bedrucken oder Prägen einzeln zu Clipautomaten zugeführt werden.

3. Verfahren nach Patentanspruch 1, dadurch gekennzeichnet, dass einem Datiergerät auf einem Transportband aufgebrachte Etiketten zugeführt werden, und dass die Etiketten vor dem Anclippen an die Würste vom Transportband abgelöst werden.

4. Etiketten zur Durchführung des Verfahrens nach Patentanspruch 1, dadurch gekennzeichnet, dass sie in Form von Streifen bestimmter Länge aus widerstandsfähigem Material bestehen und einerends gelocht sind.

5. Etiketten nach Patentanspruch 4, dadurch gekennzeichnet, dass sie aus beschichtetem Papier oder aus Kunststoff bestehen.

6. Etiketten nach Patentanspruch 4, dadurch gekennzeichnet, dass sie als Band bedruckt werden und einzeln abtrennbar ausgebildet sind.

0267871

## Fig. 1

## Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | NL-C- 42 010 (NAME) <br> * Seite 2, Zeilen 22-41; Seite 3, Zeilen 82-101; Figuren 1-5 * <br> --- | 1,2 | A 22 C 17/10 <br> B 65 B 51/04 |
| Y | DE-B-1 266 205 (BUISE) <br> * Spalte 6, Zeile 35 - Spalte 8, Zeile 32; Figuren 2,3 * <br> --- | 1,2 | |
| A | FR-A-2 261 929 (METRAPLAN SPAA) <br> * Seite 3, Zeilen 26-38; Figur 1 * <br> --- | 3,6 | |
| A | US-A-2 645 514 (MITCHKO) <br> * Insgesamt * <br> --- | 4 | |
| A | US-A-4 176 479 (L'HOIR) <br> * Insgesamt * <br> ----- | 5 | |

RECHERCHIERTE SACHGEBIETE (Int. Cl.4)

A 22 C
B 65 B
G 09 F
B 65 C

Der vorliegende Recherchenbericht wurde für alle Patentansprüche erstellt

| Recherchenort | Abschlußdatum der Recherche | Prüfer |
|---|---|---|
| DEN HAAG | 05-02-1988 | CLAEYS H.C.M. |